# EUROPÄISCHE PATENTSCHRIFT

(11) **EP 3 326 919 B1**
(45) Veröffentlichungstag und Bekanntmachung des Hinweises auf die Patenterteilung: **15.05.2019**
(21) Anmeldenummer: 17189852.1
(22) Anmeldetag: 07.09.2017
(51) Int. Cl.: B64F 1/305

(54) **KUPPELMODUL MIT LAGESENSOR**
COUPLING MODULE WITH POSITION SENSOR
MODULE DE COUPLAGE DOTÉ D'UN CAPTEUR DE POSITION

(30) Priorität: 23.11.2016 DE 202016106543 U
(43) Veröffentlichungstag der Anmeldung: 30.05.2018
(73) Patentinhaber: Hübner GmbH & Co. KG, 34123 Kassel (DE)
(72) Erfinder: Schuster, Heinz, 34123 Kassel (DE); Klöckl, Frank, 34587 Felsberg (DE)
(74) Vertreter: Patentanwälte Walther Hinz Bayer PartGmbB

(56) Entgegenhaltungen:
- EP-B1- 2 397 411
- WO-A1-03/072435
- CA-A- 911 113
- US-A1- 2003 136 898
- US-A1- 2004 187 234

## Beschreibung

Die Erfindung betrifft ein Kuppelmodul zur Ankopplung einer Fluggastbrücke an ein Flugzeug, wobei das Kuppelmodul ein Vordach und eine von dem Vordach überspannte Bodeneinrichtung aufweist, und wobei das Kuppelmodul und/oder die Bodeneinrichtung an einer Kabine der Fluggastbrücke um eine horizontale Schwenkachse relativ zur Kabine verschwenkbar aufgenommen wird, und wobei das Kuppelmodul ein Steuersystem für die Ansteuerung der Schwenkbewegung um die horizontale Schwenkachse umfasst.

### STAND DER TECHNIK

Fluggastbrücken sind aus dem Stand der Technik hinreichend bekannt. Diese dienen dem Übergang für Personen von dem Flugzeug unmittelbar in das Flughafengebäude. Da der Zutritt in das Flughafengebäude häufig höher angeordnet ist als die Türöffnung des Flugzeugs, verlaufen die Fluggastbrücken, die am vorderen, beweglichen Ende durch ein Fahrgestell gehalten sind, häufig schräg nach unten in Richtung auf die Türöffnung des Flugzeugs zu.

Am unteren Ende der Fluggastbrücke weist diese eine um eine vertikale Achse verschwenkbare Kabine auf, wobei am vorderen Ende das Kuppelmodul zum Übergang von der Kabine in das Flugzeug an der Kabine angeordnet ist.

Um das Kuppelmodul an die Türöffnung des Flugzeugs anzupassen, kann dieses an der Kabine der Fluggastbrücke verschwenkt werden. Eine um eine vertikale Achse verschwenkbare Kabine zeigt beispielsweise die US 4,559,660 A1.

CA 911 113 A offenbart ein Kuppelmodul, das vertikal schwenkbar ist, um sich an die Höhe der Türöffnung des Flugzeugs anzupassen.

Weiterhin ist bekannt, die Bodeneinrichtung um eine horizontal verlaufende Achse zu verschwenken, wie mit der EP 2 397 411 B1 offenbart. Darin wird vorgeschlagen, dass das Kuppelmodul und damit auch die Bodeneinrichtung durch die Kabine der Fluggastbrücke um eine horizontal verlaufende Mittellängsachse verschwenkbar gehalten wird. Die Verschwenkung der Bodeneinrichtung des Kuppelmoduls erfolgt dabei mittels eines Bedieners, der nach dem Anfahren der Bodeneinrichtung an die Höhe des Bodens des Flugzeugflures in der Flugzeugtür die Bodeneinrichtung noch in der Horizontalen ausrichten muss. Hierfür weisen die Fluggastbrücken meist ein Bedienpult auf, über das der Bediener die Bewegungen der Fluggastbrücke in der Höhe, die Bewegungen der Kabine um die Hochachse und die Bewegungen des Kuppelmoduls um eine horizontale Achse steuern muss.

Häufig erfolgt jedoch die Bedienung nicht in dem Maße, wie diese möglich ist. Grund hierfür sind häufig eine mangende Schulung des Bedieners und Zeitdruck, da das Anfahren der Fluggastbrücke an das Flugzeug häufig sehr schnell gehen muss.

### OFFENBARUNG DER ERFINDUNG

Aufgabe der Erfindung ist die Weiterbildung eines Kuppelmoduls zur Bildung einer Schnittstelle zwischen der Kabine einer Fluggastbrücke und einem Flugzeug, bei dem eine vereinfachte Bedienung des Anfahrens des Kuppelmoduls an die Türöffnung des Flugzeugs möglich sein soll. Insbesondere soll das Anfahren beschleunigt werden.

Diese Aufgabe wird ausgehend von einem Kuppelmodul gemäß Anspruch 1 gelöst. Vorteilhafte Weiterbildungen der Erfindung sind in den abhängigen Ansprüchen angegeben.

Die Erfindung schließt die technische Lehre ein, dass das Kuppelmodul einen Lagesensor aufweist, mittels dem eine Neigung der Bodeneinrichtung in Bezug auf eine geodätisch horizontale Lage messbar ist.

Kerngedanke der Erfindung ist die Applikation des Lagesensors, mittels dem die Neigung des Lagesensors relativ zu einer geodätisch horizontalen Lage messbar ist. Wird der Lagesensor an der Bodeneinrichtung befestigt, beispielsweise indem dieser an einer geeigneten Stelle auf der Bodeneinrichtung aufgeklebt oder in einem Modul an der Bodeneinrichtung appliziert wird, so ermöglicht der Lagesensor die Bereitstellung von Daten über die Neigung der Bodeneinrichtung relativ zur geodätisch horizontalen Lage. Damit wird das Kuppelmodul in seinem Aufbau um einen Lagesensor ergänzt, womit ein Steuerglied des Kuppelmoduls bereitgestellt wird, mittels dem die Möglichkeit geschaffen wird, die Bodeneinrichtung und damit auch das die Bodeneinrichtung überspannende Vordach in eine horizontale Lage zu bringen. Der Lagesensor ist erfindungsgemäß am Kuppelmodul angeordnet, insbesondere jedoch eignet sich eine Anordnung des Lagesensors unmittelbar an der Bodeneinrichtung. Denkbar ist jedoch auch eine alternative Anordnung des Lagesensors, insbesondere wenigstens mittelbar an der Bodeneinrichtung. So kann der Lagesensor auch am Vordach oder beispielsweise an einem Pendelrahmen des Kuppelmoduls angeordnet sein, der dazu vorgesehen sein kann, das Vordach mit der Bodeneinrichtung tragend zu verbinden.

Allgemein bekannt sind Lagesensoren, die ihre Lage relativ zu einer geodätischen Horizontalen ermitteln können. Hierfür werden die Lagesensoren mit einer entsprechenden elektronischen Komponente verbunden, mittels der die lagebedingte Ausrichtung des Lagesensors relativ zur geodätischen Horizontalen ermittelt werden kann. Wird der Lagesensor an einem Bauteil angeordnet, für das die horizontale Lage ermittelt und entsprechend eingeführt oder nachgeführt werden soll, so kann dies mit einem Lagesensor in Verbindung mit der entsprechenden elektronischen Komponente ermöglicht werden.

Der wesentliche Vorteil der erfindungsgemäßen Weiterbildung eines Kuppelmoduls liegt folglich in der Möglichkeit, die horizontale Ausrichtung des Kuppelmoduls und insbesondere der Bodeneinrichtung über den Lagesensor auszuführen. Ein Bediener muss folglich die horizontale Lage der Bodeneinrichtung nicht mehr über ein Bedienfeld einstellen, da sich das Kuppelmodul mittels des Lagesensors in jeder Verstellsituation der Fluggastbrücke selbsttätig in die Horizontale bringen kann. Dadurch wird das Kuppelmodul selbst vereinfacht, insbesondere wird dabei die Bedienung der Fluggastbrücke vereinfacht, da ein Bediener die horizontale Lage der Bodeneinrichtung und damit des Kuppelmoduls nicht mehr übernehmen muss.

Gemäß der Erfindung weisen das Kuppelmodul und insbesondere die Bodeneinrichtung einen Schwenkmotor auf, mittels dem das Kuppelmodul beziehungsweise die Bodeneinrichtung um die horizontale Schwenkachse verschwenkbar sind. Die Schwenkachse ist in oder unter der Bodeneinrichtung angeordnet, so dass ein Trägerkörper in Querrichtung mittig unter der Bodeneinrichtung angeordnet ist, wobei dann die Schwenkachse senkrecht zur Querrichtung verläuft und unter der begehbaren Oberfläche der Bodeneinrichtung angeordnet ist. Damit kann die Bodeneinrichtung wie eine Wippe um die mittig in der Querrichtung liegende Schwenkachse verkippt werden, sodass eine Fehlstellung der Bodeneinrichtung relativ zur geodätischen Horizontalen mittels des Lagesensors erkannt und mit einem zugehörigen Steuersystem ausgeglichen werden kann. Das Vordach und auch der Pendelrahmen, an dem das Vordach angeordnet ist, verschwenken mit der Schwenkbewegung mit.

Gemäß der Erfindung ist eine Steuereinheit vorgesehen, die zur Wechselwirkung mit dem Lagesensor und mit Schwenkmotor ausgebildet ist. Mit einer vorteilhaften Ausgestaltung ist die Steuereinheit zur Erfassung mittels des Lagesensors aufnehmbaren Lagedaten der geodätischen Lage der Bodeneinrichtung ausgebildet. Insbesondere ist die Steuereinheit zur Ansteuerung des Schwenkmotors ausgebildet. Die Steuereinheit kann damit die elektronische Komponente aufweisen oder selbst bilden, mit der in Verbindung mit dem Lagesensor die horizontale Lage der Bodeneinrichtung eingestellt werden kann. Für entsprechende Verstellungen der Bodeneinrichtung kann die Steuereinheit den Schwenkmotor ansteuern. Die Steuerung erfolgt mit besonderem Vorteil in Abhängigkeit der mittels des Lagesensors erfassten Lagedaten der geodätischen Lage der Bodeneinrichtung.

Gemäß der Erfindung ist die Steuereinheit so ausgebildet, dass in Wirkverbindung mit dem Lagesensor und in Wirkverbindung mit dem Schwenkmotor die Bodeneinrichtung unabhängig von einer Bewegung der Fluggastbrücke und unabhängig von einer Bewegung der Kabine in einer geodätisch horizontalen Lage haltbar oder in diese nachführbar ist. Somit bilden insbesondere die Steuereinheit, der Lagesensor und der Schwenkmotor das Steuersystem für die Ansteuerung der Schwenkbewegung des Kuppelmoduls.

Mit weiterem Vorteil ist der Lagesensor dazu ausgebildet, eine Neigung der Bodeneinrichtung in Bezug auf eine geodätisch horizontale Lage unabhängig von der die Bodeneinrichtung aufnehmenden Kabine zu messen. Insbesondere muss nicht eine Verschwenkung des Kuppelmoduls etwa in Anordnung an der Kabine der Fluggastbrücke mit dem Lagesensor gemessen werden, da damit nur relative Verschwenkungen messbar sind, eine absolute geodätisch horizontale Lage kann mit einer relativen Messung nicht ermittelt werden. Der Lagesensor ist erfindungsgemäß hingegen also so ausgebildet, dass dieser frei von sonstigen Komponenten seine Lage relativ zur Horizontalen ermitteln kann. Wird der Lagesensor an einer Komponente angebracht, also beispielsweise an einer Bodeneinrichtung des Kuppelmoduls, so kann die geodätische Lage der Bodeneinrichtung ermittelt werden.

Davon ausgehend, dass der Flurboden des Flures im Flugzeug horizontal ausgerichtet ist, kann auch angenommen werden, dass die untere Türkante zur Türöffnung des Flugzeugs ebenfalls in der Horizontalen verläuft.

Justiert nunmehr das Steuersystem das Kuppelmodul in der Horizontalen ein, so ist die Bodeneinrichtung des Kuppelmoduls auch parallel ausgerichtet zur Ausrichtung des Flurbodens im Flugzeug. Eine Verschränkung der Bodeneinrichtung relativ zum Flurboden des Flugzeugs wird folglich vermieden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht einer Fluggastbrücke mit einem an einer Kabine der Fluggastbrücke angeordneten Kuppelmodul,
- Fig. 2: eine Vorderansicht des Kuppelmoduls, wobei das Kuppelmodul mit einer horizontal ausgerichteten Bodeneinrichtung dargestellt ist, und wobei die Fluggastbrücke relativ zur horizontalen Bodeneinrichtung verdreht dargestellt ist,
- Fig. 3: die Vorderansicht des Kuppelmoduls in Anordnung an der im Vergleich zu Figur 2 verdrehten Fluggastbrücke und
- Fig. 4: eine schematisierte Seitenansicht der Fluggastbrücke mit einem Kuppelmodul in Anordnung vor einem Flugzeug.

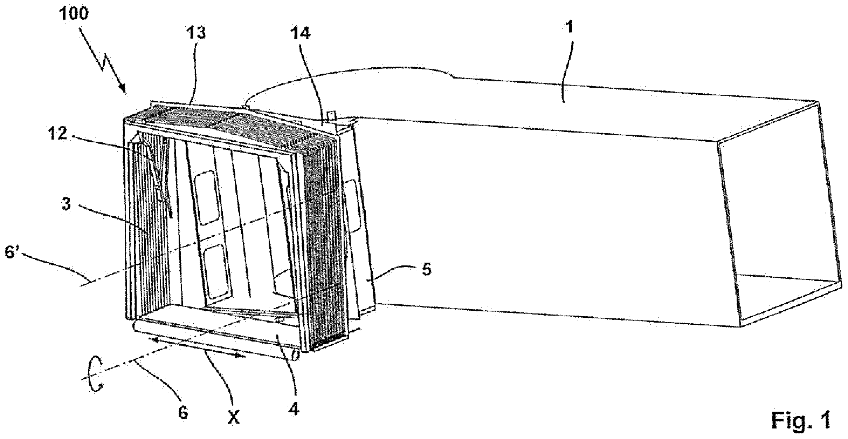

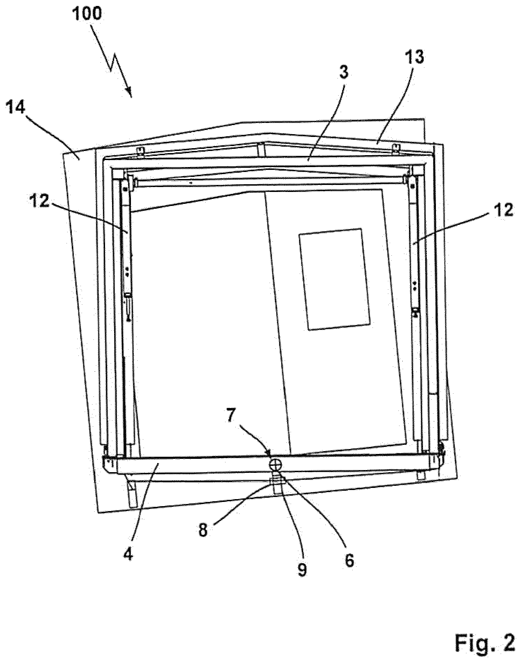

Figur 1 zeigt ein Kuppelmodul 100 in Anordnung an einer Fluggastbrücke 1. An einem vorderen, zu einem nicht abgebildeten Flugzeug weisenden Ende der Fluggastbrücke 1 ist eine Kabine 5 angeordnet, die Bestandteil der Fluggastbrücke 1 ist. An der Kabine 5 ist verschwenkbar um eine gedachte horizontale Schwenkachse 6 im Bodenbereich das Kuppelmodul 100 angeordnet, bzw. in einer nicht beanspruchten Alternative um eine gedachte mittig das Kuppelmodul 100 durchlaufende Schwenkachse 6', wobei die Schwenkachse 6 in den weiteren Figuren 2, 3 und 4 im Bereich der Bodeneinrichtung 4 verläuft.

Das Kuppelmodul 100 weist auf seiner freien Seite einen an einem Vordach 3 angeordneten Rahmen auf, der an die Außenhaut des Flugzeugs anliegend angeordnet werden kann. Im Inneren des Kuppelmoduls 100 ist zu beiden Seiten jeweils ein Gelenkarm 12 vorgesehen, der der Ausführung einer Ausstellbewegung des Vordachs 3 des Kuppelmoduls 100 dient, um das Vordach 3 vorderseitig an die Außenhaut des Flugzeugrumpfes anlegen zu können. Die Darstellung des Kuppelmoduls 100 weist darüber hinaus eine Bodeneinrichtung 4 auf, auf der Passagiere unmittelbar nach Verlassen des Flugzeugs auftreten können.

Verschwenkt das Kuppelmodul 100 um die bodenseitige Schwenkachse 6 bzw. um die mittige Schwenkachse 6', so führt das Kuppelmodul 100 eine Schwenkbewegung um die Schwenkachse 6 bzw. 6' aus. Das Vordach 3 mit den Gelenkarmen 12 sowie ein hinterseitiger Pendelrahmen 13 verschwenken mit der Schwenkbewegung des Kuppelmoduls 100 mit und bilden mit der Bodeneinrichtung 4 eine verschwenkbare Einheit. Hinter dem Pendelrahmen 13 befindet sich ein Grundrahmen 14 an der Kabine 5, vor dem der Pendelrahmen 13 verschwenken kann, der ebenfalls Bestandteil der verschwenkbaren Einheit ist.

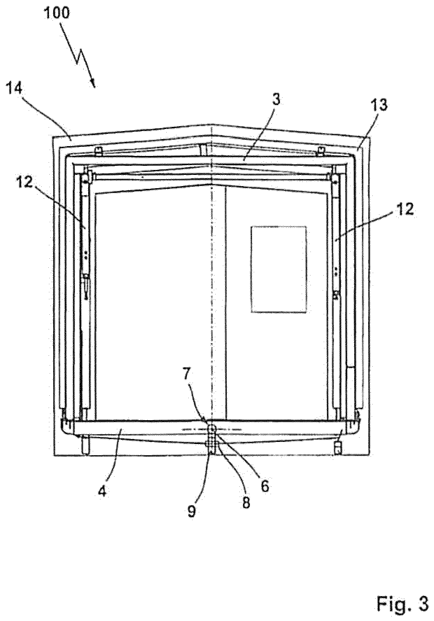

Die Figuren 2 und 3 zeigen jeweils eine Vorderansicht des Kuppelmoduls 100 in Anordnung an der Fluggastbrücke, die durch den die Fluggastbrücke in Richtung zum Kuppelmodul 100 abschließenden Grundrahmen 14 gezeigt ist. Das Kuppelmodul 100 ist mit den dargestellten Komponenten wenigstens gebildet durch die Bodeneinrichtung 4 und durch das die Bodeneinrichtung 4 überspannende Vordach 3, wobei ein hinterseitiger Pendelrahmen 13 das Vordach 3 tragend aufnimmt und mit der Bodeneinrichtung 4 verbindet. Die Gelenkarme 12 dienen zum Ausfahren des Vordachs 3, um dieses außenseitig an das Flugzeug anzulegen.

Die Fig. 2 zeigt das Kuppelmodul 100 in einer horizontalen Anordnung mit einem hinterseitig verdrehten Grundrahmen 14 und die Fig. 3 zeigt das Kuppelmodul 100 in einer weiterhin horizontalen Lage, wobei aber eine Verdrehung des Grundrahmens 14 und damit der Fluggastbrücke stattgefunden hat, beispielsweise hervorgerufen durch eine Höhenverstellung des vorderen freien Endes der Fluggastbrücke. Das Kuppelmodul 100 kann dabei in der Horizontalen gehalten werden, obwohl das vordere freie Ende der Fluggastbrücke in Folge einer Höhenverstellung ausgeführten Verdrehung relativ zum Kuppelmodul 100 verdreht wurde.

Das Kuppelmodul 100 ist in einer Schwenkachse 6 verschwenkbar aufgenommen, wobei die Schwenkachse 6, beispielsweise gezeigt durch einen Trägerkörper 9, das Kuppelmodul 100 an der Fluggastbrücke tragend aufnimmt.

Erfindungsgemäß befindet sich in Anordnung an dem Kuppelmodul 100 ein Lagesensor 7. Der Lagesensor 7 ist beispielhaft in der Schwenkachse 6 liegend an der Bodeneinrichtung 4 angeordnet. Damit kann der Lagesensor 7 mit einer Verschwenkung der Bodeneinrichtung 4 um die Schwenkachse 6 mitverschwenkt werden. Befindet sich die Bodeneinrichtung 4 nicht in einer horizontalen Lage, wie in Fig. 2 gezeigt, so befindet sich auch der Lagesensor 7 nicht in der horizontalen Lage, was mittels des Lagesensors 7 erkannt werden kann.

Durch eine entsprechende elektronische Komponente in Verbindung mit dem Lagesensor 7 kann die Lage des Kuppelmoduls 100 so nachgestellt werden, dass die Bodeneinrichtung 4 eine horizontale Anordnung einnimmt. Um das Kuppelmodul 100 um die Schwenkachse 6 zu verschwenken, dient ein Schwenkmotor 8, der im Bereich des Trägerkörpers 9 beispielhaft gezeigt angeordnet ist.

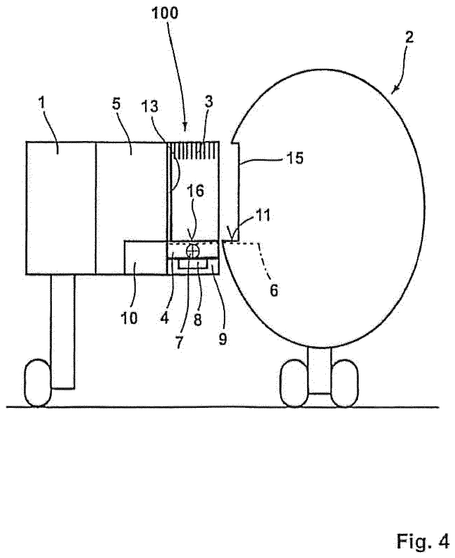

Fig. 4 zeigt schließlich in schematischer Weise die Anordnung der Fluggastbrücke 1 mit der vorderseitigen Kabine 5 und mit dem an der Kabine 5 angeordneten Kuppelmodul 100 beabstandet vor der Tür 15 eines Flugzeugs 2. Der Bodenbereich der Tür 15 bildet einen Flurboden 11 des Flugzeugs 2, der als horizontal verlaufend angenommen wird. Das Kuppelmodul 100 befindet sich in Anordnung vor der Tür 15 und muss um die Schwenkachse so verschwenkt werden, dass die Bodeneinrichtung 4 des Kuppelmoduls 100 eine horizontale Lage einnimmt, um mit der horizontalen Lage des Flurbodens 11 des Flugzeugs 2 übereinzustimmen.

Das Kuppelmodul 100 ist schematisch gezeigt und die Bodeneinrichtung 4 ist mit einem Vordach 3 überspannt, das in nicht ausgefahrener Weise ebenfalls schematisch gezeigt ist. Über den Trägerkörper 9 wird die Bodeneinrichtung 4, und damit das Vordach aufgenommen, das über den Pendelrahmen 13 tragend aufgenommen an der Bodeneinrichtung 4 angeordnet ist und diese überspannt.

An der Bodeneinrichtung 4 befindet sich ein Lagesensor 7, mit dem eine horizontale Lage erkennbar ist, sodass auch die horizontale Ausrichtung der Bodeneinrichtung 4 mit Bezug auf den oberseitig begehbaren Bereich 16 erkennbar ist.

Weiterhin umfasst die Anordnung eine Steuereinheit 10, und die Steuereinheit 10 kann mit dem Lagesensor 7 und auch mit dem Schwenkmotor 8 wechselwirken. Erkennt der Lagesensor 7 eine nicht horizontale Ausrichtung der Bodeneinrichtung 4, so ist die Steuereinheit 10 zur Erkennung der Lage der Bodeneinrichtung 4 basierend auf den Lagedaten des Lagesensors 7 dazu ausgebildet, den Schwenkmotor 8 so anzusteuern, dass schließlich die Bodeneinrichtung 4 eine horizontale Lage annimmt. Wird dabei die Kabine 5 durch eine Höhenverstellung der Fluggastbrücke beispielsweise verdreht, so kann das Kuppelmodul 100 unabhängig von der Lage der Kabine 5 grundsätzlich in der horizontalen Lage verbleiben, sofern das Steuersystem umfassend die Steuereinheit 10, den Lagesensor 7 und den Schwenkmotor 8 die horizontale Lage der Bodeneinrichtung 4 und damit auch die Lage des Vordaches 3 nachführt. Im Ergebnis ergibt sich eine grundsätzlich horizontale Lage des Kuppelmoduls 100 in Anpassung an die horizontale Lage des Flurbodens 11, sodass die Fluggastbrücke 1 lediglich noch in der Höhe verstellt werden muss, um den begehbaren Bereich 16 der Bodeneinrichtung 4 in Übereinstimmung zu bringen mit der Höhe des Flurbodens 11 der Tür 15 des Flugzeugs 2.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: Kuppelmodul
- 1: Fluggastbrücke
- 2: Flugzeug
- 3: Vordach
- 4: Bodeneinrichtung
- 5: Kabine
- 6: Schwenkachse
- 6': Schwenkachse
- 7: Lagesensor
- 8: Schwenkmotor
- 9: Trägerkörper
- 10: Steuereinheit
- 11: Flurboden
- 12: Gelenkarm
- 13: Pendelrahmen
- 14: Grundrahmen
- 15: Tür
- 16: begehbarer Bereich

- X: Querrichtung

## Patentansprüche

1. Kuppelmodul (100) zur Ankopplung einer Fluggastbrücke (1) an ein Flugzeug (2), wobei das Kuppelmodul (100) ein Vordach (3) und eine von dem Vordach (3) überspannte Bodeneinrichtung (4) aufweist, und wobei das Kuppelmodul (100) und/oder die Bodeneinrichtung (4) an einer Kabine (5) der Fluggastbrücke (1) um eine horizontale Schwenkachse (6) relativ zur Kabine (5) verschwenkbar aufgenommen wird, und wobei das Kuppelmodul (100) einen Lagesensor (7) aufweist, mittels dem eine Neigung der Bodeneinrichtung (4) in Bezug auf eine geodätisch horizontale Lage messbar ist,
**dadurch gekennzeichnet, dass**
- ein Trägerkörper (9) in Querrichtung (X) mittig unter der Bodeneinrichtung (4) angeordnet ist und wobei die Schwenkachse (6) senkrecht zur Querrichtung (X) verläuft und in oder unter der begehbaren Oberfläche der Bodeneinrichtung (4) angeordnet ist, und wobei
- eine Steuereinheit (10) vorgesehen und derart ausgebildet ist, dass in Wirkverbindung mit dem Lagesensor (7) und in Wirkverbindung mit einem Schwenkmotor (8) die Bodeneinrichtung (4) unabhängig von einer Bewegung der Fluggastbrücke (1) und unabhängig von einer Bewegung der Kabine (5) in einer geodätisch horizontalen Lage haltbar oder in diese nachführbar ist.

2. Kuppelmodul (100) nach Anspruch 1,
**dadurch gekennzeichnet,**
**dass** die Steuereinheit (10) zur Erfassung von mittels des Lagesensors (7) ausgebbaren Lagedaten der geodätischen Lage der Bodeneinrichtung (4) ausgebildet ist.

3. Kuppelmodul (100) nach Anspruch 1 oder 2,
**dadurch gekennzeichnet,**
**dass** die Steuereinheit (10) zur Ansteuerung des Schwenkmotors (8) ausgebildet ist.

4. Kuppelmodul (100) nach Anspruch 3,
**dadurch gekennzeichnet,**
**dass** die Ansteuerung in Abhängigkeit der mittels des Lagesensors (7) erfassten Lagedaten der geodätischen Lage der Bodeneinrichtung (4) ausführbar ist.

5. Kuppelmodul (100) nach einem der Ansprüche 1 bis 4,
**dadurch gekennzeichnet,**
**dass** der Lagesensor (7) dazu ausgebildet ist, eine Neigung der Bodeneinrichtung (4) in Bezug auf eine geodätisch horizontale Lage unabhängig von der die Bodeneinrichtung (4) aufnehmenden Kabine (5) zu messen.

## Claims

1. A coupling module (100) for coupling a passenger boarding bridge (1) with an aircraft (2), wherein the coupling module (100) has a canopy roof (3) and a floor assembly (4) spanned by the canopy roof (3), and wherein the coupling module (100) and/or the floor assembly (4) is received at a cabin (5) of the passenger boarding bridge (1) so that it can swivel relative to the cabin (5) around a horizontal swivel axis (6), and wherein the coupling module (100) comprises a position sensor (7), by means of which an inclination of the floor assembly (4) relative to a geodetic horizontal position can be measured,
**characterized in that**
- a support body (9) is disposed centrally in the transverse direction (X) under the floor assembly (4) and wherein the swivel axis (6) runs perpendicularly to the transverse direction (X) and is disposed in or under the walkable surface of the floor assembly (4), and wherein
- a control unit (10) is provided and designed in such a manner that through the interaction with the position sensor (7) and through the interaction with the swivel motor (8), the floor assembly (4) can be maintained in or moved into a geodetic horizontal position independently from a movement of the passenger boarding bridge (1) and independently from a movement of the cabin (5).

2. The coupling module (100) according to claim 1,
**characterized in that**
the control unit (10) is designed to detect position data regarding the geodetic position of the floor assembly (4) that can be issued by means of the position sensor (7).

3. The coupling module (100) according to claim 1 or 2,
**characterized in that**
the control unit (10) is designed for actuating the swivel motor (8).

4. The coupling module (100) according to claim 3,
**characterized in that**
the actuation is carried out as a function of the position data of the geodetic position of the floor assembly (4) detected by means of the position sensor (7).

5. The coupling module (100) according to one of the claims 1 to 4,
**characterized in that**
the position sensor (7) is designed to measure an inclination of the floor assembly (4) relative to a geodetic horizontal position independently from the cabin (5) receiving the floor assembly (4).

## Revendications

1. Module de couplage (100) pour le couplage d'une passerelle d'embarquement (1) avec un avion (2), où le module de couplage (100) comporte un auvent (3) et un assemblage de plancher (4) enjambé par l'auvent (3), et
où le module de couplage (100) et/ou l'assemblage de plancher (4) est reçu au niveau d'une cabine (5) de la passerelle d'embarquement (1) de manière à pouvoir pivoter par rapport à la cabine (5) autour d'un axe de pivotement (6) horizontale, et où le module de couplage (100) comporte un capteur de position (7), au moyen duquel peut être mesurée une inclinaison de l'assemblage de plancher (4) par rapport à une position géodésique horizontale,
**caractérisé en ce que**
- un corps de support (9) est disposé de manière centrée dans la direction transversale (X) sous l'assemblage de plancher (4) et où l'axe de pivotement (6) s'étend perpendiculairement à la direction transversale (X) et est disposé dans ou sous la surface praticable de l'assemblage de plancher (4),
et où
- une unité de commande (10) est prévue et conçue de telle manière que l'assemblage de plancher (4) peut être maintenu ou déplacé dans une position géodésique horizontale en interaction avec le capteur de position (7) et en interaction avec un moteur de pivotement (8), indépendamment d'un mouvement de la passerelle d'embarquement (1) et indépendamment d'un mouvement de la cabine (5).

2. Module de couplage (100) selon la revendication 1,
**caractérisé en ce que**
l'unité de commande (10) est conçue pour acquérir des données de position concernant la position géodésique de l'assemblage de plancher (4) qui peuvent être émises en sortie au moyen du capteur de position (7).

3. Module de couplage (100) selon la revendication 1 ou 2,
**caractérisé en ce que**
l'unité de commande (10) est conçue pour commander le moteur de pivotement (8).

4. Module de couplage (100) selon la revendication 3,
**caractérisé en ce que**
la commande peut être réalisée en fonction des données de position de la position géodésique de l'assemblage de plancher (4) acquises au moyen du capteur de position (7).

5. Module de couplage (100) selon l'une des revendications 1 à 4,
**caractérisé en ce que**
le capteur de position (7) est conçu pour mesurer une inclinaison de l'assemblage de plancher (4) par rapport à une position géodésique horizontale indépendamment de la cabine (5) recevant l'assemblage de plancher (4).
